(19) Europäisches Patentamt
European Patent Office
Office européen des brevets

(11) **EP 3 694 208 A1**

(12) **EUROPEAN PATENT APPLICATION**

(43) Date of publication:
**12.08.2020 Bulletin 2020/33**

(51) Int Cl.:
**H04N 13/282** (2018.01)

(21) Application number: **19155606.7**

(22) Date of filing: **05.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Nims, Jerry**
  **Norcross, GA 30071 (US)**
• **Karszes, William M.**
  **Norcross, GA 30071 (US)**

• **Pol, Samuel**
  **Norcross, GA 30071 (US)**

(72) Inventors:
• **Nims, Jerry**
  **Norcross, GA 30071 (US)**
• **Karszes, William M.**
  **Norcross, GA 30071 (US)**
• **Pol, Samuel**
  **Norcross, GA 30071 (US)**

(74) Representative: **HGF**
  **1 City Walk**
  **Leeds LS11 9DX (GB)**

(54) **A METHOD AND SYSTEM FOR SIMULATING A 3-DIMENSIONAL IMAGE SEQUENCE**

(57)     A method for simulating a 3-D image sequence from a sequence of 2-D image frames (110), the method comprising: capturing a plurality of 2-D image frames (110) of a scene from a plurality of different observation points, wherein a first, proximal plane and a second, distal plane is identified within each image frame (110) in the sequence, and wherein each observation point maintains substantially the same first, proximal image plane for each image frame; determining a depth estimate for the first, proximal and second, distal plane within each image frame in the sequence; aligning the first, proximal plane of each image frame (110) in the sequence and shifting the second, distal plane of each subsequent image frame (110) in the sequence based on the depth estimate of the second, distal plane for each image frame (110), to produce a modified image frame corresponding to each 2-D image frame; and displaying the modified image frames sequentially. Also disclosed is a system comprising means for carrying out the above method.

FIG. 6

**Description**

**Introduction**

The present invention relates to the simulation of 3-D image sequences from a sequence of 2-D image frames and in particular, but not exclusively, to 3-D image sequences for use in digital advertising.

The human visual system (HVS) relies on two dimensional images to interpret three dimensional fields of view. By utilising the mechanisms with the HVS we create images/ scenes that are comparable with the HVS.

Mismatches between the point at which the eyes must converge and the distance to which they must focus when viewing a sequence of 3D images have negative consequences. While 3D imagery has proven popular and useful for digital advertising, medical imaging and many other applications, there is a well-known problem.

In natural viewing, images arrive at the eyes with varying binocular disparity, so that as viewers look from one point in the visual scene to another, they must adjust their eyes' vergence. The distance at which the lines of sight intersect is the vergence distance. Failure to converge at that distance results in double images. The viewer also adjusts the focal power of the lens in each eye (i.e., accommodates) appropriately for the fixated part of the scene. The distance to which the eye must be focused is the accommodative distance. Failure to accommodate to that distance results in blurred images. Vergence and accommodation responses are coupled in the brain: specifically, changes in vergence drive changes in accommodation and changes in accommodation drive changes in vergence. Such coupling is advantageous in natural viewing because vergence and accommodative distances are nearly always identical.

In 3D images sequences, images have varying binocular disparity thereby stimulating changes in vergence as happens in natural viewing. But the accommodative distance remains fixed at the display distance, so the natural correlation between vergence and accommodative distance is disrupted, leading to the so-called vergence-accommodation conflict. The conflict causes several problems. Firstly, differing disparity and focus information cause perceptual depth distortions. Secondly, viewers experience difficulties in simultaneously fusing and focusing on key subjects within the image sequence. Finally, attempting to adjust vergence and accommodation separately causes visual discomfort and fatigue in viewers.

**Background**

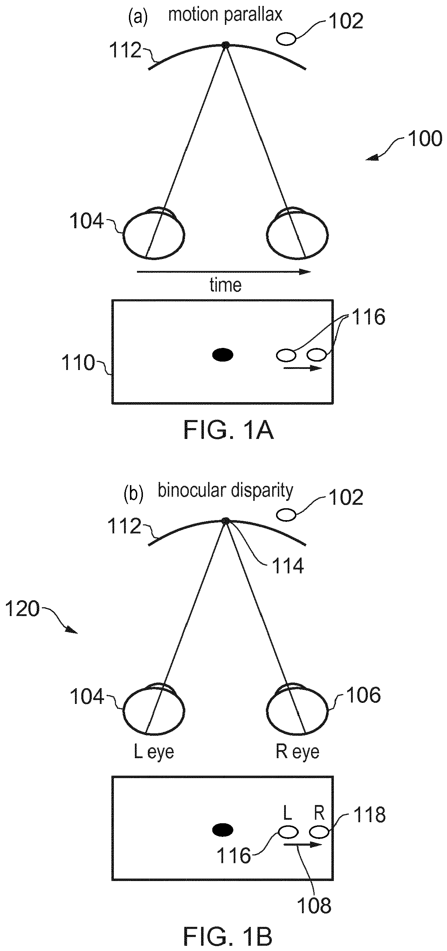

Perception of depth is based on a variety of cues, with binocular disparity and motion parallax generally providing more precise depth information than pictorial cues. Binocular disparity and motion parallax provide two independent quantitative cues for depth perception. Binocular disparity refers to the difference in position between the two retinal image projections of a point in 3D space. As illustrated in Figures 1A and 1B, the robust percepts of depth that are obtained when viewing an object 102 in an image scene 110 demonstrates that the brain can compute depth from binocular disparity cues alone. In binocular vision, the Horopter 112 is the locus of points in space that have the same disparity as the fixation point 114. Objects lying on a horizontal line passing through the fixation point 114 result in a single image, while objects a reasonable distance from this line result in two images 116, 118.

By using two images 116, 118 of the same object 102 obtained from slightly different angles, it is possible to triangulate the distance to the object 102 with a high degree of accuracy. Each eye views a slightly different angle of the object 102 seen by the left 104 and right eyes 106. This happens because of the horizontal separation parallax of the eyes. If an object is far away, the disparity 108 of that image 110 falling on both retinas will be small. If the object is close or near, the disparity will be large.

Motion parallax 120 refers to the relative image motion (between objects at different depths) that results from translation of the observer 104. Isolated from binocular and pictorial depth cues, motion parallax 120 can also provide precise depth perception, provided that it is accompanied by ancillary signals that specify the change in eye orientation relative to the visual scene 110. As illustrated, as eye orientation 104 changes, the apparent relative motion of the object 102 against a background gives hints about its relative distance. If the object 102 is far away, the object 102 appears stationary. If the object 102 is close or near, the object 102 appears to move more quickly.

In order to see the object 102 in close proximity and fuse the image on both retinas into one object, the optical axes of both eyes 104, 106 converge on the object 102. The muscular action changing the focal length of the eye lens so as to place a focused image on the fovea of the retina is called accommodation. Both the muscular action and the lack of focus of adjacent depths provide additional information to the brain that can be used to sense depth. Image sharpness is an ambiguous depth cue. However, by changing the focused plane (looking closer and/ or further than the object 102), the ambiguities are resolved.

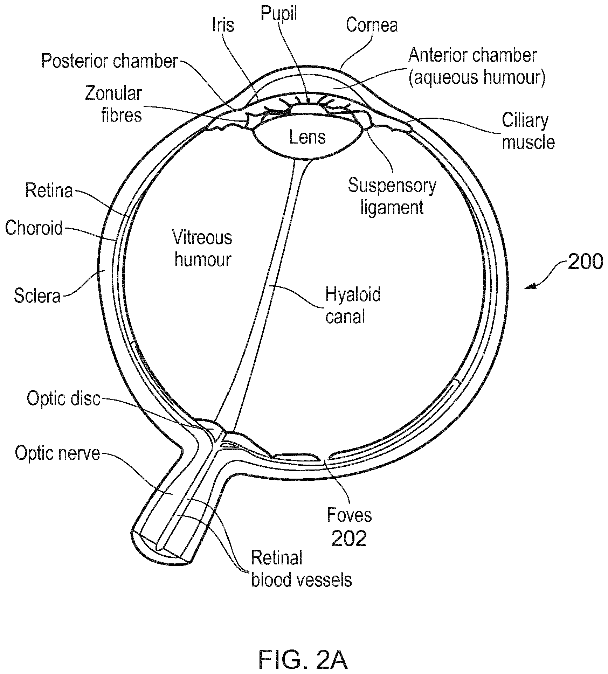

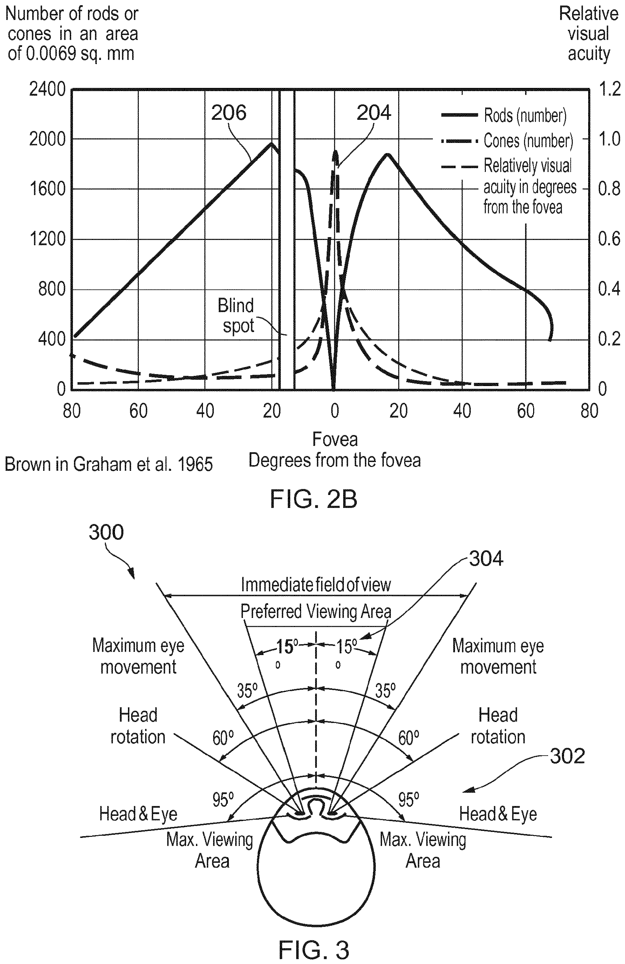

Figures 2A and 2B show the anatomy of the eye 200 and a graphical representation of the distribution of rods and cones respectively. The fovea 202 is responsible for sharp central vision (also referred to as foveal vision), which is necessary where visual detail is of primary importance. The fovea 202 is the depression in the inner retinal surface 204, about 1.5 mm wide and is made up entirely of cones 204 specialised for maximum visual acuity. Rods 206 are low intensity receptors that receive information in grey scale and are important to peripheral vision, while cones 204 are high intensity receptors that receive information in colour vision.

The importance of the fovea 202 will be understood more clearly with reference to Figure 2B, which shows the distribution of cones 204 and rods 206 in the eye 200. As shown, a large proportion of cones 204, providing the highest visual acuity, lie within a 1.5° angle around the centre of the fovea 202.

Figure 3 illustrates a typical field of view 300. As shown, the fovea 202 sees only the central 1.5 of the visual field 302, with the preferred field of view 304 lying within $\pm$ 15° of the centre of the fovea 202. Focusing an object on the fovea, therefore, depends on the linear size of the object 102, the viewing angle and the viewing distance. A large object 102 viewed in close proximity will have a large viewing angle falling outside the foveal vision, while a small object 102 viewed at a distance will have a small viewing angle falling within the foveal vision. An object 102 that falls within the foveal vision will be produced in the mind's eye with high visual acuity. However, under natural viewing conditions, viewers do not just passively perceive. Instead, they dynamically scan the visual scene 110 by shifting their eye fixation and focus between objects at different viewing distances. In doing so, the oculomotor processes of accommodation and vergence (the angle between lines of sight of the left and right eyes 104, 106) must be shifted synchronously to place new objects in sharp focus in the centre of each retina. Accordingly, nature has reflexively linked accommodation and vergence, such that a change in one process automatically drives a matching change in the other.

Conventional stereoscopic displays force viewers to try to decouple these processes, because while they must dynamically vary vergence angle to view objects at different stereoscopic distances, they must keep accommodation at a fixed distance or else the entire display will slip out of focus. This decoupling generates eye fatigue and compromises image quality when viewing such displays.

It is an object of the present invention to overcome or alleviate these known problems.

## Summary of the Invention

In accordance with a first aspect of the present invention, there is a method of simulating a 3-D image sequence from a sequence of 2-D image frames, the method comprising: capturing a plurality of 2-D image frames of a scene from a plurality of different observation points, wherein a first, proximal plane and a second, distal plane is identified within each image frame in the sequence, and wherein each observation point maintains substantially the same first, proximal image plane for each image frame; determining a depth estimate for the first, proximal and second, distal plane within each image frame in the sequence; aligning the first, proximal plane of each image frame in the sequence and shifting the second, distal plane of each subsequent image frame in the sequence based on the depth estimate of the second, distal plane for each image frame, to produce a modified image frame corresponding to each 2-D image frame; and displaying the modified image frames sequentially.

The present invention varies the focus of objects at different planes in a displayed scene to match vergence and stereoscopic retinal disparity demands to better simulate natural viewing conditions. By adjusting the focus of key objects in a scene to match their stereoscopic retinal disparity, the cues to ocular accommodation and vergence are brought into agreement. As in natural vision, the viewer brings different objects into focus by shifting accommodation. As the mismatch between accommodation and vergence is decreased, natural viewing conditions are better simulated and eye fatigue is decreased.

Preferably, the method further comprises determining three or more planes for each image frame in the sequence.

Furthermore, it is preferred that the planes have different depth estimates.

In addition, it is preferred that each respective plane is shifted based on the difference between the depth estimate of the respective plane and the first, proximal plane.

Preferably, the first, proximal plane of each modified image frame is aligned such that the first, proximal plane is positioned at the same pixel space.

It is also preferred that the first plane comprises a key subject point.

Preferably, the planes comprises at least one foreground plane.

In addition, it is preferred that the planes comprise at least one background plane.

Preferably, the sequential observation points lie on a straight line.

Preferably, the sequential observation points lie on a curved line.

It is also preferred that the sequential observation points are separated by a distance of between 50 - 80 mm.

Moreover, it is preferred that the sequential observation points are separated by a distance of 64 mm.

In accordance with a second aspect of the present invention, there is a system for simulating a 3-D image sequence from a sequence of 2-D image frames, comprising: image capture means for capturing a plurality of 2-D image frames of a scene from a plurality of different sequential observation points, wherein a first, proximal plane and a second, distal plane is identified within each image frame in the sequence; displacement means for displacing the image capture means to the sequential observation points to maintain substantially the same first, proximal image plane for each image frame; means for determining a depth estimate for the first, proximal plane and second, distal plane within each image frame in the sequence; means for aligning the first, proximal plane of each subsequent image frame in the sequence based on the depth estimate of the second, distal plane for each image frame and means for shifting the second, distal plane of each subsequent image frame in the sequence based on the depth estimate of the second, distal plane for each image frame in order to produce, to produce a modified image frame corresponding to each 2-D image frame; and display means for displaying the modified image frames sequentially.

Preferably, the system comprises means for determining three or more planes for each image frame in the sequence.

In addition, it is preferred that the planes have different depth estimates and wherein each respective plane is shifted based on the difference between the depth estimate of the respective plane and the first, proximal plane.

It is also preferred that the system comprises means for aligning the first, proximal plane of each modified image frame to position the first, proximal plane at the same pixel space of the display means.

Preferably, the first, proximal plane comprises a key subject point.

It is also preferred that the multiple planes comprise at least one foreground plane and at least one background plane.

It is preferred that the displacement means displaces the image capture means to the sequential observation points along a straight path.

It is also preferred that the displacement means displaces the image capture means to the sequential observation points along a straight path.

It is also preferred that the sequential observation points are separated by a distance of between 50 - 80 mm.

Moreover, it is preferred that the sequential observation points are separated by a distance of 64 mm.

In accordance with a second aspect of the present invention there is a non-transitory computer readable storage medium storing instructions, the instructions when executed by a processor causing the processor to perform the method according to the second aspect of the present invention.

**Brief Description of the Drawings**

A specific embodiment of the invention shall now be described, by way of example only, with reference to the accompanying drawings in which:

Figures 1A illustrates a 2D rendering of an image based upon a change in orientation of an observer relative to a display;

Figure 1B illustrates a 2D rendering of an image with binocular disparity as a result of the horizontal separation parallax of the left and right eyes;

Figure 2A is a cross-sectional view of the structure of an eyeball;

Figure 2B is a graph relating density of rods and cones to the position of the fovea;

Figure 3 is a top view of an observer's field of view;

Figure 4A is a view illustrating the relationship between an interocular distance and a linear image capturing distance of a camera rig in accordance with the present invention;

Figure 4B is a view illustrating the relationship between an interocular distance and a curvilinear image capturing distance of a camera rig in accordance with the present invention;

Figure 5A is a perspective view of the camera rig of Figure 4B;

Figure 5B is a side view of the camera rig of Figure 4B;

Figure 6 is a flow diagram of the process steps of converting an acquired series of stereoscopic images into a 3-D DIF image sequence in accordance with the present invention; and

Figure 7 is a diagram illustrating a geometrical shift of a point between two successive images frames in accordance with the present invention.

## Detailed Description

As described above, the sense of depth of a stereoscopic image varies depending on the distance between the camera and the key subject, known as the image capturing distance. The sense of depth is also controlled by the vergence angle and the interocular distance between the capture of each successive image by the camera which effects binocular disparity.

Binocular disparity is a stereognostic perception factor that occurs as a result of the average separation of the left and right eyes which ranges from approximately 50 - 80 mm, with the mean average being approximately 64 mm. When binocular disparity is comparatively large, the observer has the sense that the distance to the key subject is relatively close. When the binocular disparity is comparatively small, the observer has the sense that the distance to the key subject is relatively large. The vergence angle refers to the angle between the left and right eyes having the key subject as a vertex when the eyes are focused on the key subject. As the vergence angle increases (as the both eyes rotate inward), the distance of the key subject is perceived by the observer as being relatively small. As the vergence angle decreases (as both eyes rotate outward), the distance of the key subject is perceived by the observer as being relatively large.

For best results, the interocular distance between the capture of successive images is fixed to match the average separation of the left and right eyes in order to maintain constant binocular disparity. In addition, the distance to the key subject is chosen such that the captured image of the key subject is sized to fall within the foveal vision of the observer in order to produce high visual acuity of the key subject and to maintain a vergence angle equal to or less than the preferred viewing angle of 15.

The type of image capture system is chosen according to the size of and distance to the key subject. For image capturing distances of less than 1.5 m, a curvilinear stereoscopic image capture system is used. For image capturing distances greater than 1.5 m, a linear stereoscopic image capture system is used.

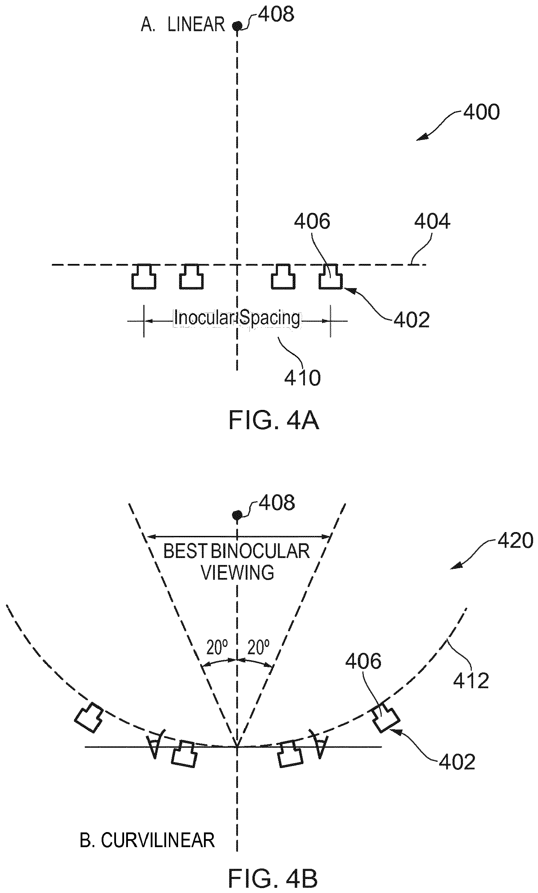

Figure 4A illustrates a linear stereoscopic image capture system 400 for capturing a stereoscopic image (e.g. a 2D frame of a 3D sequence). As shown, the linear stereoscopic image capture system 400 has a camera rig 402 moveably coupled to a linear track 404. The camera rig 402 comprises a stepper motor (not shown) for moving the camera rig 402 along the linear track 404 in precisely defined incremental steps. The camera rig 402 also has a camera 406 oriented to capture a stereoscopic image of a key subject 408 and a control module (not shown) for controlling the orientation of the camera 406 as well as the stepper motor.

In use, the key subject 408 is placed at an image capture distance of 1.5 m or greater from the camera 406. The control module controls the orientation of the camera 406 and the movement of the camera rig 402 along the linear track 404 as the camera 406 captures a stereoscopic image at predetermined intervals, determined by the interocular distance 410. Ideally, the image capture distance is constant.

If the image capturing distance varies as a result of a change in the distance between the camera 406 and the key subject 408 or a change in the focal length of the camera 406 (i.e. from zooming in or out), the vergence angle will vary accordingly if the interocular distance 410 between the capture of each successive stereoscopic image is kept constant. This results in a change in vergence angle, which drives a change in accommodation. However, accommodative distance remains fixed at the display distance, so the natural correlation between vergence and accommodative distance is disrupted, leading to the so-called vergence-accommodation conflict which results in eye fatigue and low image quality. To avoid this, the interocular distance 410 between each successive image may be varied to accommodate changes in the image capturing distance that result in a vergence angle greater than the preferred viewing angle of 15. For example, as the image capture distance decreases, the vergence angle increases and the interocular distance 410 between successive images is decreased accordingly. Similarly, as the image capture distance increases, the vergence angle decreases and the interocular distance 410 between the successive images is increased accordingly.

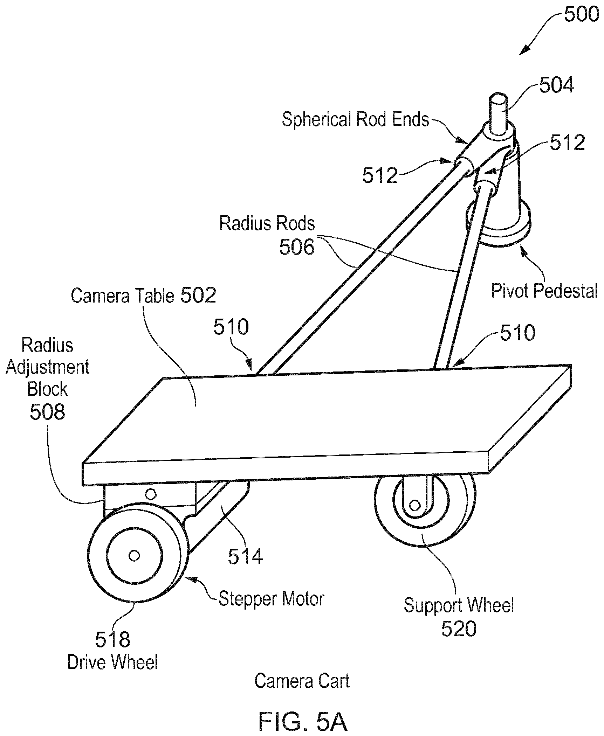

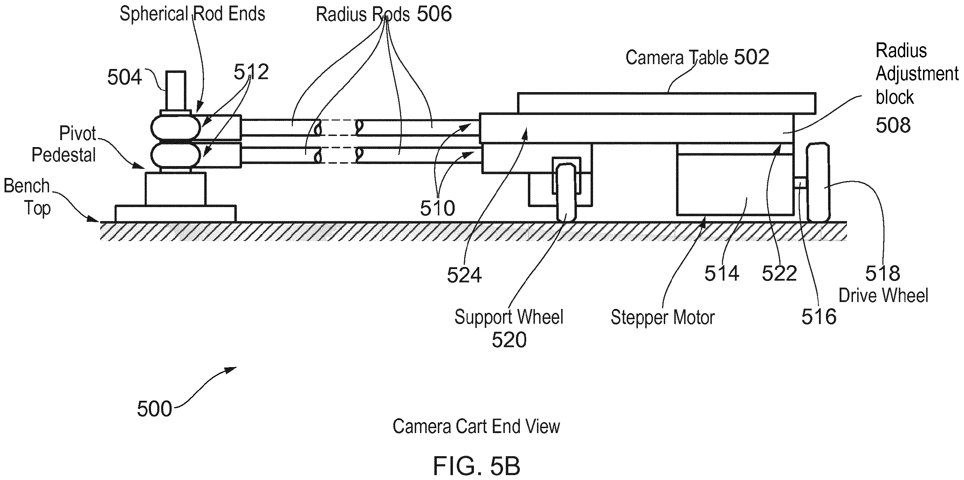

Figure 4B shows a curvilinear image capture system 420 for capturing a stereoscopic image. As shown, the curvilinear image capture system 420 has a camera rig 402 (described in more detail below with reference to Figures 5A and 5B) that is moveable in a circular path 412 around a fixed point. In a curvilinear image capture system 420, the key subject 408 is positioned at or close to the fixed point. The camera rig 402 comprises a stepper motor (not shown) for moving the camera rig 402 along the circular path 412 in precisely defined incremental steps corresponding to the interocular distance. The camera rig 402 also has a camera 406 oriented to capture a stereoscopic image of the key subject 408 and a control module (not shown) for controlling the orientation of the camera 408 as well as the stepper motor.

In use, the key subject 408 is positioned close to the fixed point with an image capture distance of 1.5 m or less from the camera 406. The control module controls the orientation of the camera 406 and the movement of the camera rig 402 along the circular path 412 as the camera 406 captures a stereoscopic image at predetermined intervals, determined by the interocular distance. Ideally, the focal length of the camera 406 is fixed on the key subject 408. However, the interocular distance is may vary as a result of a change in the focal length of the camera 406 (i.e. from zooming in or out) causing a change in the vergence angle. To avoid this, the interocular distance between each successive image may be varied to accommodate changes in focal length that result in a vergence angle greater than the preferred viewing angle of 15. For example, as the focal length decreases, the vergence angle increases and the interocular distance between successive images is decreased accordingly. Similarly, as the focal length increases, the vergence angle decreases and the interocular distance between the successive images is increased accordingly.

With reference now to Figures 5A and 5B, there is shown a camera rig 500 for use in a curvilinear image capture system 420. The camera rig 500 has a rectangular camera table 502 for mounting a camera (not shown), a pivot pedestal 504 around which the camera table 502 moves and a pair of radius rods 506 which extend radially inward from underneath the camera table 502 to the pivot pedestal 504. A radius adjustment block 508 is mounted underneath the camera table 502 and couples a first end 510 of each radius rod 506 to the camera table 502. Each radius rod 506 is mounted to and rotatable around the pivot pedestal 504 at a second end 512, opposite to the first end 510.

A stepper motor 514 is mounted underneath the radius adjustment block 508 at a first end 522. A drive shaft 516 extends radially outward from the stepper motor 514 and is coupled to a drive wheel 518. The stepper motor 514 controls the rotation of the drive wheel 518 in precisely defined incremental steps. The camera table 502 is supported by a second wheel 520 mounted underneath the radius adjustment bock 508 at a second end opposite to the first end 524.

In use, the radius adjustment block 508 adjusts the length at which the radius rods 506 extend radially inward from the camera table 502 thereby adjusting the distance between the camera table 502 and the pivot pedestal 504 and consequently the image capture distance. The radius adjustment block 508 adjusts the length of the radius rods 506 to place the key subject 408 at the focal length of the camera 402.

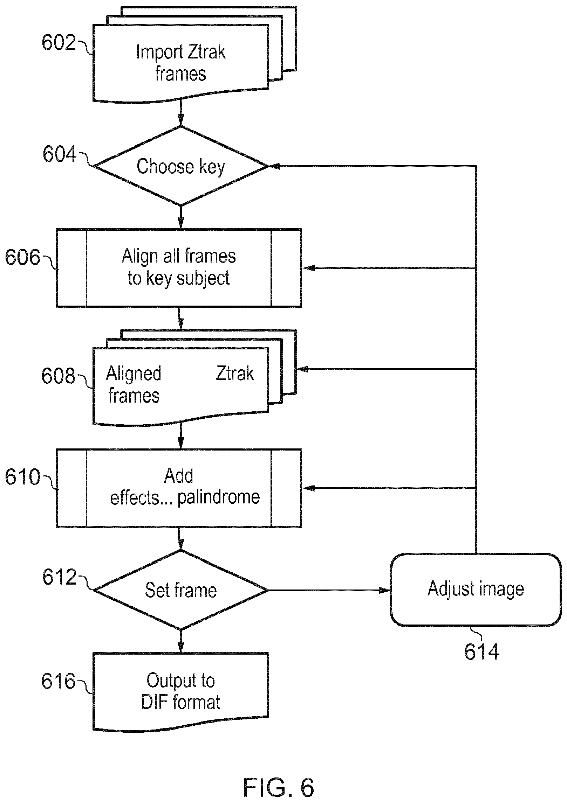

The control module causes the stepper motor 514 to rotate the drive wheel 518 of the camera rig 500 in precisely defined incremental steps corresponding to the interocular distance. The camera rig momentarily stops and a stereographic image is captured by the camera 402. This process is repeated until a desired number of stereographic images have been captured. The stereographic images are then processed according to the block diagram of Figure 6.

Figure 6 shows the process steps of converting the acquired stereoscopic images into a 3-D image sequence as performed by a computer system (not shown). In the first step 602, the computer system is configured to receive the number of stereographic images captured by the camera 402 through an image acquisition application. The image acquisition application converts each stereographic image to a digital source image, such as a JPEG, GIF, TIF format. Ideally, each digital source image includes a number of visible objects, subjects or points therein, such as foreground, closest point, background, furthest point, and a key subject 408. The foreground and background point are the closest point and furthest point from the viewer, respectively. The depth of field is the depth or distance created within the object field (depicted distance from foreground to background). The principal axis is the line perpendicular to the scene passing through the key subject 408 point, while the parallax is the displacement of the key subject 408 point from the principal axis. In digital composition the displacement is always maintained as a whole integer number of pixels from the principal axis.

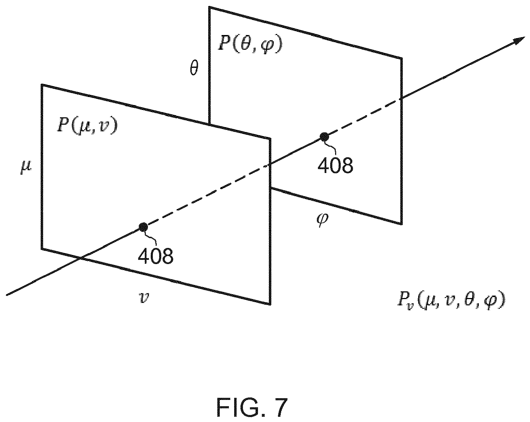

In the second step 604, the computer system identifies a key subject 408 in each source image. They key subject 408 identified in each source image corresponds to the same key subject 408. The computer system may identify the key subject 408 based on a depth map of the source image. Similarly, the computer system may identify a foreground, closest point and background, furthest point using a depth map of the source image. In the third step 606, the computer system transforms each source image to align the identified key subject 408 in the same pixel space as the previous source image. Horizontal and vertical alignment of each source image requires a dimensional image format (DIF) transform. The DIF transform is a geometric shift that does not change the information acquired at each point in the source image, but can be viewed as a shift of each point in the source image in Cartesian space (illustrated in Figure 7). As a plenoptic function, the DIF transform is represented by the equation:

$$P'(u,v) \times P'(\theta, \varphi) = \left[P_{u,v} + \Delta_{u,v}\right] \times \left[P_{\theta,\varphi} + \Delta_{\theta,\varphi}\right]$$

Where $\Delta_{u,v} = \Delta_{\theta,\varphi}$

In the case of a digital image source, the geometric shift corresponds to a geometric shift of pixels which contain the plenoptic information, the DIF transform then becomes:

$$(Pixel)_{x,y} = (Pixel)_{x,y} + \Delta_{x,y}$$

The computer system may also apply a geometric shift to the background and or foreground using the DIF transform. The background and foreground may be geometrically shifted according to the depth of each relative to the depth of the key subject 408 identified by the depth map of the source image. Controlling the geometrical shift of the background and foreground relative to the key subject 408 controls the motion parallax of the key subject 408. As described, the apparent relative motion of the key subject 408 against the background or foreground provides the observer with hints about its relative distance. In this way, motion parallax is controlled to focus objects at different depths in a displayed scene to match vergence and stereoscopic retinal disparity demands to better simulate natural viewing conditions. By adjusting the focus of key subjects 408 in a scene to match their stereoscopic retinal disparity, the cues to ocular accommodation and vergence are brought into agreement.

After application of the DIF transform, the sources images are compiled into a set sequence at step 608. The sequence follows the same order in which the source images were acquired and an inverted-reverse sequence is added at step 610 to create a seamless palindrome loop. At step 612, a time interval is assigned to each frame in the sequence. The time interval between frames may be adjusted at step 614 to provide smooth motion and optimal 3-D viewing. The resultant 3-D image sequence is then output as a DIF sequence at step 616 where it can be viewed on a display device (e.g., viewing screen whether implemented on a smart phone, PDA, monitor, TV, tablet or other viewing device having stereo enabled viewing, via parallax barrier, barrier screen, overlays, waveguides or other viewing technology, capable of projecting information in a pixel format) or printer (e.g., consumer printer, store kiosk, special printer or other hard copy device) to print multidimensional digital master image on, for example, lenticular or other physical viewing material.

The present description is for illustrative purposes only and should not be construed to narrow the breadth of the present disclosure in any way. Thus, those skilled in the art will appreciate that various modifications might be made to the presently disclosed embodiments without departing from the full and fair scope of the present disclosure. For example, the image acquisition application may receive a source image in another format, including DICOM format for use in medical imaging.

Embodiments of the invention also relate to an apparatus for performing the operations herein. Such a computer program is stored in a non-transistory computer readable medium. A machine-readable medium includes any mechanism for storing information in a form readable by a machine (e.g. a computer). For example, a machine-readable (e.g. computer readable) medium includes a machine (e.g. a computer) readable storage medium (e.g. read only memory ("ROM"), random access memory ("RAM"), magnetic disk storage media, optical storage media, flash memory devices).

The processes and methods depicted in the figures may be performed by processing logic that comprises hardware (e.g. circuitry, dedicated logic, etc.), software (e.g. embodied on a non-transistory computer readable medium), or a combination of both. Although the processes and method are described above in terms of some sequential operations, it should be appreciated that some of the operations described may be performed in a different order. Moreover, some operations may be performed sequentially than in parallel.

Embodiments of the present invention are not described with reference to any particular programming language. It will be appreciated that a variety of programming languages may be used to implement the teachings of embodiments of the invention as described herein.

**Claims**

1. A method of simulating a 3-D image sequence from a sequence of 2-D image frames, the method comprising:

capturing a plurality of 2-D image frames of a scene from a plurality of different observation points, wherein a first, proximal plane and a second, distal plane is identified within each image frame in the sequence, and wherein each observation point maintains substantially the same first, proximal image plane for each image frame;
determining a depth estimate for the first, proximal and second, distal plane within each image frame in the sequence;
aligning the first, proximal plane of each image frame in the sequence and shifting the second, distal plane of each subsequent image frame in the sequence based on the depth estimate of the second, distal plane for each image frame, to produce a modified image frame corresponding to each 2-D image frame; and
displaying the modified image frames sequentially.

2. The method of claim 1, comprising determining three or more planes for each image frame in the sequence and, optionally wherein the planes have different depth estimates.

3. The method of claim 2, wherein each respective plane is shifted based on the difference between the depth estimate of the respective plane and the first, proximal plane.

4. The method of any preceding claim, wherein the first, proximal plane of each modified image frame is aligned such that the first, proximal plane is positioned at the same pixel space and/ or optionally wherein the first plane comprises a key subject point.

5. The method of any of claims 2 to 4, wherein the planes comprises at least one foreground plane and/ or optionally wherein the planes comprise at least one background plane.

6. The method as claimed in any of the preceding claims, wherein the sequential observation points lie on a straight line or, wherein the sequential observation points lie on a curved line.

7. The method as claimed in any of claims 1 to 6, wherein the sequential observation points are separated by a distance of between 50 - 80 and, optionally wherein the sequential observation points are separated by a distance of 64 mm.

8. A system for simulating a 3-D image sequence from a sequence of 2-D image frames, comprising:

image capture means for capturing a plurality of 2-D image frames of a scene from a plurality of different sequential observation points, wherein a first, proximal plane and a second, distal plane is identified within each image frame in the sequence;
displacement means for displacing the image capture means to the sequential observation points to maintain substantially the same first, proximal image plane for each image frame;
means for determining a depth estimate for the first, proximal plane and second, distal plane within each image frame in the sequence;
means for aligning the first, proximal plane of each subsequent image frame in the sequence based on the depth estimate of the second, distal plane for each image frame and means for shifting the second, distal plane of each subsequent image frame in the sequence based on the depth estimate of the second, distal plane for each image frame in order to produce, to produce a modified image frame corresponding to each 2-D image frame; and
display means for displaying the modified image frames sequentially.

9. The system of claim 8, comprising means for determining three or more planes for each image frame in the sequence and, optionally wherein the planes have different depth estimates.

10. The system of claim 9, wherein each respective plane is shifted based on the difference between the depth estimate of the respective plane and the first, proximal plane.

11. The system of any of claims 8 to 10, comprising means for aligning the first, proximal plane of each modified image frame to position the first, proximal plane at the same pixel space of the display means and/ or optionally wherein the first, proximal plane comprises a key subject point.

12. The system of any of claims 8 to 15, wherein the multiple planes comprises at least one foreground plane and/ or optionally wherein the multiple planes comprise at least one background plane.

13. The system as claimed in any of claims 8 to 12, wherein the displacement means displaces the image capture means to the sequential observation points along a straight path or, wherein the displacement means displaces the image capture means to the sequential observation points along a straight path.

14. The system as claimed in any of claims 8 to 13, wherein the sequential observation points are separated by a distance of between 50 - 80 and, optionally wherein the sequential observation points are separated by a distance of 64 mm.

15. A non-transitory computer readable storage medium storing instructions, the instructions when executed by a processor causing the processor to perform the method of any of claims 1 to 7.

FIG. 1A

FIG. 1B

FIG. 2A

Number of rods or cones in an area of 0.0069 sq. mm

Relative visual acuity

Brown in Graham et al. 1965

Fovea
Degrees from the fovea

FIG. 2B

FIG. 3

A. LINEAR ●⌐408

⌐400

406    404

←Inocular Spacing→    ⌐402

410

## FIG. 4A

⌐408

⌐420

BEST BINOCULAR
VIEWING

20°  20°    406

412

⌐402

B. CURVILINEAR

## FIG. 4B

500

504

Spherical Rod Ends

512

512

Radius Rods
506

Camera Table 502

Pivot Pedestal

510

510

Radius
Adjustment
Block
508

514

Stepper Motor

518
Drive Wheel

Support Wheel
520

Camera Cart

FIG. 5A

Camera Cart End View

FIG. 5B

EP 3 694 208 A1

602 — Import Ztrak frames

604 — Choose key

606 — Align all frames to key subject

608 — Aligned frames     Ztrak

610 — Add effects... palindrome

612 — Set frame

614 — Adjust image

616 — Output to DIF format

FIG. 6

FIG. 7

Europäisches
Patentamt

European
Patent Office

Office européen
des brevets

## EUROPEAN SEARCH REPORT

Application Number

EP 19 15 5606

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/066786 A1 (LANDA BENZION [IL]) 12 March 2009 (2009-03-12) * paragraph [0084] - paragraph [0097] * ----- | 1-15 | INV. H04N13/282 |
| A | US 9 256 974 B1 (HINES STEPHEN P [US]) 9 February 2016 (2016-02-09) * column 8, line 24 - line 48 * * column 7, line 29 - line 35 * ----- | 1-15 | |
| A | US 2016/253786 A1 (BAINS INDERJIT [CA]) 1 September 2016 (2016-09-01) * paragraph [0021] - paragraph [0036] * ----- | 1-15 | |

TECHNICAL FIELDS
SEARCHED (IPC)

H04N

The present search report has been drawn up for all claims

| Place of search | Date of completion of the search | Examiner |
|---|---|---|
| Munich | 19 July 2019 | Penchev, Petyo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 15 5606

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2019

| Patent document cited in search report | | Publication date | Patent family member(s) | | Publication date |
|---|---|---|---|---|---|
| US 2009066786 | A1 | 12-03-2009 | CN 1998153 A<br>US 2009066786 A1 | | 11-07-2007<br>12-03-2009 |
| US 9256974 | B1 | 09-02-2016 | NONE | | |
| US 2016253786 | A1 | 01-09-2016 | NONE | | |

EPO FORM P0459

For more details about this annex : see Official Journal of the European Patent Office, No. 12/82